# EUROPÄISCHE PATENTSCHRIFT

(11) **EP 1 257 382 B1**
(45) Veröffentlichungstag und Bekanntmachung des Hinweises auf die Patenterteilung: **21.04.2004**
(21) Anmeldenummer: 01916888.9
(22) Anmeldetag: 21.02.2001
(51) Int. Cl.: B23K 9/20, B23Q 17/22

(54) **BOLZENSCHWEISSKOPF ZUM GENAUEREN POSITIONIEREN EINES SCHWEISSBOLZENS**
BOLT WELDING HEAD FOR PRECISER POSITIONING OF A WELDING BOLT
TETE DE SOUDAGE DE GOUJONS POUR UN POSITIONNEMENT PLUS PRECIS D'UN GOUJON

(30) Priorität: 21.02.2000 DE 10007837
(43) Veröffentlichungstag der Anmeldung: 20.11.2002
(73) Patentinhaber: Nelson Bolzenschweiss-Technik GmbH & Co. KG, 58285 Gevelsberg (DE)
(72) Erfinder: CITRICH, Ulrich, 58285 Gevelsberg (DE); HAILER, Steffen, 44789 Bochum (DE); MADSAK, Jürgen, 58339 Breckerfeld (DE)
(74) Vertreter: Eder, Thomas, Dr.-Ing.
(86) Internationale Anmeldenummer: PCT/DE2001/000670
(87) Internationale Veröffentlichungsnummer: WO 2001/062426

(56) Entgegenhaltungen:
- EP-A- 0 297 031
- DE-A- 4 314 528
- DE-A- 19 828 986
- DE-C- 4 336 104
- PATENT ABSTRACTS OF JAPAN vol. 010, no. 105 (M-471), 19. April 1986 (1986-04-19) & JP 60 238089 A (MITSUBISHI JUKOGYO KK), 26. November 1985 (1985-11-26)

## Beschreibung

Die Erfindung betrifft einen Bolzenschweißkopf mit den Merkmalen des Oberbegriffs des Patentanspruchs 1 (siehe z. B. DE-A-43 14 528).

Schweißbolzen werden bislang folgendermaßen am Werkstück angeschweißt: Die Mehrachsenhandhabungseinrichtung, überlicherweise ein programmierbarer Industrieroboter, bringt den Bolzenschweißkopf nahe an die Werkstücksoberfläche in die sogenannte Schweißausgangsposition. Von dieser Schweißausgangsposition verfährt der Bolzenschweißkopf den Schweißbolzen in Vorschubrichtung, bis es zum Kontakt des Schweißbolzens mit der Werkstückoberfläche kommt. Eine Kontaktschaltung spricht bei Kontakt des Schweißbolzens mit dem Werkstück an, so dass die Position des Werkstückes in Vorschubrichtung ermittelt wird. Diese Position wird gespeichert, und der Schweißbolzen wird um eine bestimmte Strecke vom Werkstück abgehoben. Mit Abheben des Schweißbolzens wird ein Lichtbogen mittels Hubzündung erzeugt, und der Schweißbolzen wird vom Bolzenschweißkopf zum Beispiel Weg- oder Geschwindigkeitsgesteuert in Vorschubrichtung bewegt und in die entstehende Schmelze eingetaucht.

Aus der DE-A-43 14 528 ist ein Verfahren zur Überwachung des Schweißvorgangs beim Bolzenschweißen und eine Vorrichtung zur Durchführung des Verfahrens bekannt, wobei die Bewegungen eines Schweißkopfes beziehungsweise einer Schweißpistole mittels eines Sensors erfasst und mit einem vorbestimmten Soll-Verlauf verglichen werden. Hieraus wird eine Aussage über die Qualität der fertigen Schweißung ermittelt. Bei diesem Verfahren ragt die Bolzenspitze vor dem Aufsetzen des Schweißkopfes über ein Stützrohr hinaus. Hierdurch ist gewährleistet, dass nach dem Aufsetzen des Stützrohrs auf das Werkstück die Bolzenspitze in Kontakt mit dem Werkstück ist. Während der Aufsetzbewegung wird der Bolzen zusammen mit der Schweißachse gegenüber dem Stützrohr verschoben.

Der elektrische Kontakt kann bei diesem Schweißkopf in Axialrichtung selbstverständlich in gleicher Weise detektiert werden.

Gerade im Automobilbau müssen Schweißbolzen mit Hilfe von Robotern in Sicken, Vertiefungen oder Rillen am Werkstück angeschweißt werden. Hierbei ist die Positionierung des Schweißbolzens sehr wichtig, da eine starke Abweichung der Lage des Schweißbolzens zu erheblichen Problemen bei der anschließenden Verwendung des angeschweißten Schweißbolzens führen kann (z.B. bei Installation von Halterungen, Klipsen oder Leisten). Da z.B. die Karosse eines Fahrzeugs, an der die Schweißbolzen angebracht werden, in der Einspannvorrichtung des Transportsystems im Automobilwerk Lagetoleranzen aufweist und da die Karosse selbst zum Teil erhebliche Toleranzen haben kann, verschiebt sich die Lage der Soll-Position des Schweißbolzens im Raum, so dass die Schweißbolzen zu nahe oder zu weit entfernt von Seitenwänden in Sicken, Vertiefungen oder Rillen angeschweißt werden.

Aus der EP-A-0 297 031 ist ein Werkzeug mit einer Sensorvorrichtung bekannt, die dazu dient, bei Bearbeitungsrobotern die genaue Positionierung des Werkzeugs, beispielsweise einer Schweißdüse für das Lichtbogenschweißen, zu ermöglichen.

Hierzu ist ein das Werkzeug umgebender taktiler Fühler, vorzugsweise in Form einer konzentrischen Hülse vorgesehen.

Der Fühler ist in der Mittelachse des Werkzeugs sowie im Winkel zur Mittelachse auslenkbar. Ein federelastisches Glied sorgt dafür, dass der taktile Fühler in seiner konzentrischen Lage verbleibt beziehungsweise nach einer Auslenkung immer wieder in diese zurückkehrt. Über Dehnungsmessstreifen am federelastischen Glied wird ein der Auslenkung analoges Signal gebildet. Dieses Signal dient dazu, beim Antasten eines Werkstücks den tatsächlichen Werkzeug-Nullpunkt zu ermitteln.

Ausgehend von diesem Stand der Technik liegt der Erfindung die Aufgabe zu Grunde, einen Bolzenschweißkopf zu schaffen, der eine exakte laterale Positionierung des Bolzens zum Werkstück ermöglicht und der einfach und kostengünstig herstellbar ist.

Die Erfindung löst diese Aufgabe mit den Merkmalen des Patentanspruchs 1.

Der erfindungsgemäße Bolzenschweißkopf ermöglicht die Durchführung eines Schweißverfahrens mit folgenden Schritten:
a) der Bolzenschweißkopf wird von der Handhabungseinrichtung an das Werkstück herangebracht,
b) die Handhabungseinrichtung verfährt den Bolzenschweißkopf quer zur Vorschubrichtung, in der der Schweißbolzen beim späteren Schweißen bewegt wird, bis eine am Bolzenschweißkopf vorgesehene Kontakterkennungseinrichtung eine Seitenfläche des Werkstücks kontaktiert,
c) die Handhabungseinrichtung verfährt den Bolzenschweißkopf quer zur Vorschubrichtung um ein bestimmtes Sollmaß in eine Schweißausgangsposition, und
d) der Schweißbolzen wird in Vorschubrichtung zur Werkstückoberfläche bis auf Kontakt mit ihr verfahren.

Vorzugsweise wird dann mit Abheben des Schweißbolzens von der Werkstückoberfläche durch Hubzündung ein Lichtbogen zwischen Schweißbolzen und Werkstück erzeugt.

Bei diesem Verfahren wird nicht nur die axiale Position des Werkstücks vor dem Verschweißen ermittelt, sondern auch die radiale Position des Werkstücks, indem mittels des erfindungsgemäßen Bolzenschweißkopfes eine Seitenfläche des Werkstücks detektiert und ihre Lage ermittelt wird. Damit lässt sich der gewünschte Sollabstand (Abstand der Seitenfläche vom angeschweißten Bolzen) exakt erzielen, und der Schweißbolzen ist in Sicken, Vertiefungen oder Rillen im Werkstück exakt positioniert.

In Schritt b) kann die Handhabungseinrichtung der Bolzenschweißkopf in einer ersten Richtung seitlich zu einer Seitenfläche des Werkstücks verfahren, wobei eine Kontakterkennungseinrichtung am Bolzenschweißkopf den Werkstückkontakt signalisiert und wobei die sich daraus ergebende erste Position bei Werkstückkontakt eingelesen und gespeichert wird. Der Bolzenschweißkopf wird anschließend in einer zur ersten Richtung entgegengesetzten zweiten Richtung bis in eine zweite Position verfahren, in der die Kontakterkennungseinrichtung keinen Werkstückkontakt mehr signalisiert. Diese zweite Position wird eingelesen und gespeichert. Ein Referenzwert aus der ersten und der zweiten Position wird anschließend ermittelt, von dem aus der Bolzenschweißkopf um das vorbestimmte Sollmaß seitlich in die Schweißausgangsposition bewegt wird.

Der Referenzwert ist vorzugsweise der Mittelwert zwischen der ersten und der zweiten Position. Die Referenzwertermittlung hat den Hintergrund, dass der Bolzenweißkopf mit einer bestimmten Geschwindigkeit auf die Seitenfläche auftrifft und des zu einer gewissen zeitlichen Verzögerung kommt, bis der Bolzenschweißkopf in der ersten Position stehen bleibt, so dass die Seitenfläche sozusagen überfahren wird und die erste Position nicht exakt die seitliche Position der Seitenfläche wiedergibt. Auch beim Verfahren in die zweite Richtung ist eine zeitliche Verzögerung vorhanden, bis die Kontakterkennungseinrichtung keinen Kontakt mehr signalisiert und/oder der Bolzenschweißkopf in der zweiten Position stehen bleibt. Der Referenzwert aus erster und zweiter Position ist dann die fiktive tatsächliche Lage der Seitenfläche. Der Referenzwert kann abhängig von den Geschwindigkeiten sein, mit denen der Bolzenschweißkopf in der ersten und in der zweiten Richtung verfahren wird.

Darüber hinaus ist vorgesehen, dass im Schritt d) der Bolzenschweißkopf den Schweißbolzen verfährt, wobei es auch möglich ist, dass die Mehrachsenhandhabungseinrichtung den Bolzenschweißkopf bis relativ nahe zur Werkstückoberfläche bringt und der Bolzenschweißkopf selbst die Schweißachse anschließend bis zur Erreichung des Werkstückkontaktes in Vorschubrichtung bewegt.

Der erfindungsgemäße Bolzenschweißkopf zeichnet sich dadurch aus, dass eine Kontakterkennungseinrichtung vorgesehen ist, die bei Verfahren des Bolzenschweißkopfes quer zur Vorschubrichtung das Vorhandensein einer Seitenfläche des Werkstückes ermittelt. Quer zur Vorschubrichtung ist im übrigen vorzugsweise rechtwinkelig zur Vorschubrichtung.

Die Kontakterkennungseinrichtung zur Ermittlung der Seitenfläche weist gemäß der bevorzugten Ausführungsform ein Tastglied auf zum Berühren der Seitenfläche.

Dieses Tastglied sollte elastisch federnd oder federnd am Bolzenschweißkopf gelagert sein, damit es nicht plastisch verformt wird, wenn es zum Kontakt mit der Seitenfläche des Werkstücks kommt.

Das Tastglied ist erfindungsgemäß eine den Schweißbolzen umgebende Hülse. Dies hat den Vorteil, dass das Tastglied in jeder Richtung verfahren werden kann und vor dem Schweißbolzen die Seitenfläche des Werkstücks kontaktiert. Die äußere Mantelfläche der Hülse ist konzentrisch zur Schweißbolzenachse vorgesehen. Damit ist unabhängig von der Verfahrrichtung beim Ermitteln der Lage der Seitenfläche des Werkstücks stets ein gleicher Abstand zwischen der äußeren Mantelfläche, die den Kontakt zur Seitenfläche herstellt, und der Achse des Schweißbolzens gegeben. Durch das Ausbilden der Hülse als Teil einer Überwurfmutter, mit der der Bolzenhalter an der Schweißachse befestigt ist, ergibt sich eine sehr einfache Bauform und die Möglichkeit des Nachrüstens bekannter bereits bestehender Schweißköpfe.

Darüber hinaus ist die Kontakterkennungseinrichtung zur Ermittlung des Kontaktes des Schweißbolzens und des Werkstücks zugleich auch die Kontakterkennungseinrichtung, die das Tastglied aufweist, so dass insgesamt nur eine Kontakterkennungseinrichtung vorgesehen ist, die in Vorschubrichtung und in seitlicher Richtung der Positionserkennung dient.

Das Tastglied ist an der Schweißachse befestigt und stromdurchflossen. Damit es nicht mit dem Schweißbolzen angeschweißt wird, steht es nicht in direktem Kontakt mit ihm, wobei beide Teile zur Positionserkennung elektrisch miteinander verbunden sind.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 ein Bolzenschweißkopf nach der Erfindung und das Werkstück, an dem ein Schweißbolzen angeschweißt werden soll;
- Figur 2 eine Querschnittsansicht längs der Linie II-II in Figur 1;
- Figur 3 das Bolzenschweißkopf bei einer Positionserkennung in einer anderen Werkstückumgebung; und
- Figur 4 eine vergrößerte Ansicht des vorderen Endes des Schweißkopfes mit aufgeschnittener Hülse.

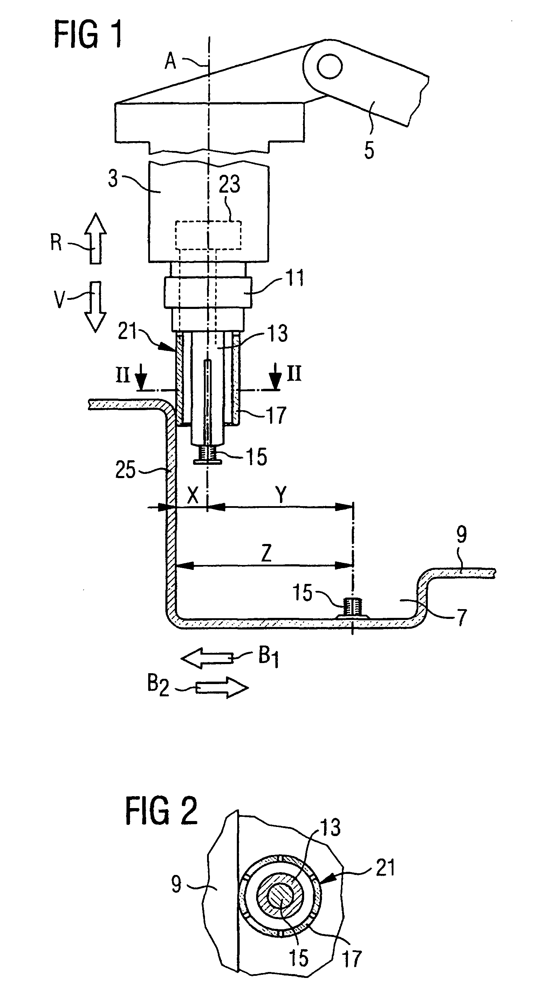

In Figur 1 ist der vordere Teil eines Bolzenschweißkopfes 3 dargestellt, der an einer programmierbaren Mehrachsenhandhabungseinrichtung 5 in Form eines Industrieroboters befestigt ist. Mit Hilfe des Bolzenschweißkopfes sollen Schweißbolzen 15 in einer Vertiefung 7 eines Werkstücks 9 in Form eines Fahrzeugbleches verschweißt werden. Der Bolzenschweißkopf weist einen nicht näher gezeigten Linearantrieb auf, der eine Schweißachse 11 mit einem daran befestigten Schweißbolzenhalter 13 in axialer Richtung, d.h. in Vorschubrichtung V und in Gegenrichtung R bewegen kann.

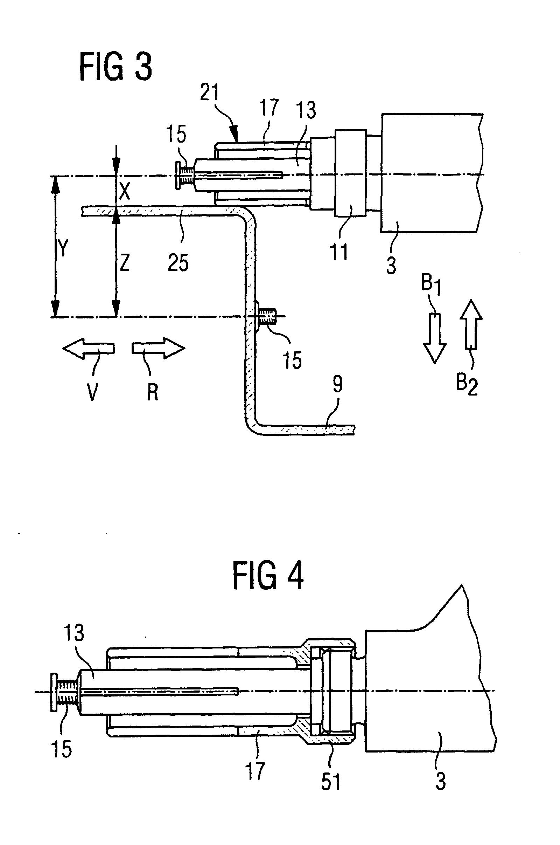

Mit 15 ist ein im Schweißbolzenhalter 13 aufgenommener Schweißbolzen dargestellt, der zusätzlich in der später verschweißten Position am Werkstück befestigt dargestellt ist. Der Schweißbolzenhalter 13 wird von einem Tastglied in Form einer kreiszylindrischen, in Längsrichtung mehrfach geschlitzten Hülse 17 umgeben, deren äußere Seitenwand 21 konzentrisch zur Achse A und konzentrisch zur Schweißachse 11 verläuft (vgl. Figur 2). Die Hülse 17 ist einstückig an einer Überwurfmutter 51 befestigt, die der Arretierung des Schweißbolzenhalters 13 an der Schweißachse 11 dient (Figur 4).

Der Schweißbolzenhalter 13 und der Schweißbolzen 15 stehen in Vorschubrichtung V gegenüber der Hülse 17 vor.

Der Schweißbolzenhalter 13 und die Hülse 17 sind elektrisch mit einer gemeinsamen Kontakterkennungseinrichtung 23 verbunden, so daß an beiden die gleiche Spannung anliegt.

Die Kontakterkennungseinrichtung 23, die beispielsweise eine Kontaktschaltung oder in der Steuerungseinheit des Bolzenschweißkopfes integriert sein kann, dient zur axialen und radialen Positionsermittlung der Werkstückoberfläche.

Die Hülse 17 kann in Umfangsrichtung geschlossen sein. Es können auch zahlreiche fingerartige Fortsätze oder ein stiftförmiges Tastglied vorgesehen sein, das mit der Kontakterkennungseinrichtung 23 gekoppelt ist.

Der dargestellte Bolzenschweißkopf soll den Schweißbolzen 15 in einem bestimmten Abstand Z von der Seitenwand 25 des Werkstücks 9 entfernt anschweißen. Der Abstand Z ist der sogenannte Sollabstand. Dieser Sollabstand soll eingehalten werden, damit der Schweißbolzen 15 in der Vertiefung 7 exakt plaziert wird.

Um den Schweißbolzen 15 exakt positioniert anzuschweißen, wird folgendes Verfahren angewandt:
a) Der Bolzenschweißkopf 3 wird vom Industrieroboter 5 nahe an das Werkstück herangefahren, nämlich in eine Position, die in seitlicher Richtung etwa der Position des verschweißten Bolzens entspricht, die ohne auftretenden Toleranzen im Raum als Referenzwert programmiert wurde.
b) Der Roboter 5 verfährt den Bolzenschweißkopf 3 rechtwinkelig zur Vorschubrichtung V, in Richtung B1 bis die Hülse 17, die Teil der Kontakterkennungseinrichtung ist, die äußere Seitenfläche der Seitenwand 25 kontaktiert. Die Kontakterkennungseinrichtung 23, die auch eine Art Schalter sein kann, sendet ein entsprechendes Signal zur nicht gezeigten Steuerungseinheit, die sofort den Industrieroboter 5 anhält. Diese erste Position, in der sich der Bolzenschweißkopf dann befindet, wird eingelesen und gespeichert. Da der Abstand der Achse A des Schweißbolzens 15 von der äußeren Mantelfläche 21 der Hülse 17 bekannt ist (Maß X), läßt sich die seitliche Position der Seitenfläche der Seitenwand 25 zur Achse A ermitteln.
c) Der Roboter 5 verfährt den Bolzenschweißkopf 3 nun in eine zweite Richtung B₂, die entgegengesetzt zur Richtung B₁ ist, in der der Bolzenschweißkopf 3 zur Seitenwand 25 bewegt wurde. Der Bolzenschweißkopf 3 wird um das Sollmaß Y (Sollabstand Z - Maß X) in Richtung B₂ verfahren, so daß sich die Achse A im Sollabstand Z von der Seitenwand 25 befindet.
d) Anschließend verfährt der Industrieroboter 5 den Schweißbolzen 15 in Richtung V bis nahe an das Werkstück. Der Linearmotor bewegt die Schweißachse 11 und damit den Schweißbolzen 15 in Richtung V, bis es zum Kontakt des Schweißbolzens 15 mit der Oberfläche des Werkstücks 9 kommt. Die Kontakterkennungseinrichtung 23 spricht an, die Lage der Schweißachse 11 wird mittels eines Wegmeßsystems im Bolzenschweißkopf 3 ermittelt.
e) Weg gesteuert wird die Schweißachse 11 in Richtung R um eine vorbestimmte Strecke von der Werkstückoberfläche abgehoben.
f) Mit dem Abheben wird durch Hubzündung ein Lichtbogen zwischen Schweißbolzen 15 und Werkstück 7 erzeugt.
g) Die Schweißachse 11 wird weggesteuert in Richtung V bewegt, und der Schweißbolzen 15 taucht in das sich gebildete Schweißgut ein.

Der Schweißbolzen 15 ist nun lagegenau am Werkstück 9 befestigt.

Die Hülse 17 ist durch die Schlitze radial federnd und elektrisch leitend mit dem Bolzenhalter 13 verbunden. Die Werkstückberührung wird durch eine Kontaktmeldung (elektrischer Stromfluß zwischen Hülse 17 oder Schweißbolzen - 15 und Werkstück) detektiert.

In Figur 3 ist eine andere Ausgangssituation für den Bolzenschweißkopf dargestellt, da der Schweißbolzen 15 in horizontaler Richtung an einer Wand befestigt werden muß, die in keiner Sicke oder Vertiefung gelegen ist. Hier wird der Bolzenschweißkopf quer zur Vorschubrichtung V so weit verfahren, bis die Mantelfläche der Seitenwand 25 von der Hülse 17 kontaktiert wird. Anschließend wird der Bolzenschweißkopf vom Industrieroboter in Richtung R zurückgefahren, damit bei einem Verfahren in Richtung B1 in die Schweißausgangsposition der Schweißbolzen 15 nicht an der Seitenwand 25 anschlägt. Anschließend wird der Bolzenschweißkopf 3 um ein Sollmaß Y (Y = X + Sollabstand Z) in Richtung B1 in die Schweißausgangsposition verfahren. Von dort aus kann entweder der Roboter den Bolzenschweißkopf 3 näher zur Oberfläche des Werkstücks fahren oder der Bolzenschweißkopf 3 verfährt die Schweißachse 11 in Richtung V bis es zum Kontakt des Schweißbolzens 15 mit dem Werkstück 9 kommt. Die nachfolgenden Schritte sind die bereits im Zusammenhang mit Figur 1 erklärten Schritte des Anschweißens des Bolzens 15.

Wenn der Bolzenschweißkopf 3 seitlich verfahren wird und die Hülse 17 die Seitenfläche des Werkstücks kontaktiert, kommt es zu einer gewissen Verzögerung, bis der Roboter 5 zum stehen kommt. Die Hülse 17 ist in dieser ersten Position geringfügig seitlich ausgelenkt, so daß das Maß X nicht exakt dem Abstand der Achse von der Seitenfläche entspricht, sondern größer als der tatsächliche Abstand ist. Um diesen geringen Fehler zu korrigieren, wird der Bolzenschweißkopf gemäß eines modifizierten Verfahrens in eine zur Richtung B1 entgegengesetzte, zweite Richtung B2 verfahren, bis der Kontakterkennungseinrichtung 23 keinen Werkstückkontakt mehr signalisiert. Der Roboter 5 bleibt sofort stehen, und diese zweite Position wird eingelesen und gespeichert. Anschließend wird ein Referenzwert aus der ersten und der zweiten Position ermittelt, vorzugsweise der Mittelwert zwischen beiden Positionen. Von diesem Mittelwert aus wird dann der Bolzenschweißkopf 3 um das Sollmaß Y seitlich in die Schweißausgangsposition bewegt, von der aus der Schweißbolzen 15 nur noch in axialer Richtung verfahren wird, bis er angeschweißt ist.

Wenn die zu detektierende Seitenfläche nicht rechtwinkelig zur Bewegungsrichtung B1 steht und die Lage des Werkstücks in einer Aufnahme schwanken kann, könnte es zu Ungenauigkeiten bei der Bestimmung der Lage der Seitenfläche kommen. Aus diesem Grund kann vorgesehen sein, daß der Schweißkopf zuerst in Vorschubrichtung V bis zur Berührung des Bolzens mit dem Werkstück zugestellt wird und zuerst die Lage des Werkstücks in Vorschubrichtung V ermittelt wird. Anschließend wird der Bolzen um eine definierte Strecke in Richtung R abgehoben und schließlich, wie erklärt, seitlich verfahren, um die Lage der Seitenfläche zu bestimmen.

## Patentansprüche

1. Bolzenschweißkopf,
a) mit einer in axialer Richtung verfahrbaren Schweißachse (11),
b) mit einem Schweißbolzenhalter (13), der mit der Schweißachse (11) gekoppelt ist,
c) wobei zur Ermittlung der Seitenfläche ein Tastglied zum Berühren der Seitenfläche vorgesehen ist, welches als koaxial zum Schweißbolzenhalter (13) angeordnete Hülse (17) ausgebildet ist,
**dadurch gekennzeichnet**,
d) dass der Bolzenschweißkopf eine Kontakterkennungseinrichtung (23), die beim Verfahren des Bolzenschweißkopfes (3) in einer Richtung quer zur Vorschubrichtung das Vorhandensein einer Seitenfläche des Werkstücks ermittelt und
e) dass die Hülse (17) Teil einer Überwurfmutter (51) ist, mit der der Schweißbolzenhalter (13) an der Schweißachse (11) befestigt ist, und dass die Hülse (17) elektrisch mit dem Schweißbolzenhalter (13) verbunden ist und
f) dass die Kontakterkennungseinrichtung (23) zur Ermittlung des Kontakts zwischen der Hülse und der Seitenfläche des Werkstücks auch als Kontakterkennungseinrichtung (23) zur Ermittlung des Kontakts des Schweißbolzens (15) mit dem Werkstück (9) in Vorschubrichtung ausgebildet ist, wobei die Kontakterkennungseinrichtung (23) mit dem Schweißbolzenhalter (13) und der Hülse (17) elektrisch verbunden ist

2. Bolzenschweißkopf nach Anspruch 1, **dadurch gekennzeichnet, dass** die Hülse (17) mehrere fingerartige Fortsätze aufweist.

3. Bolzenschweißkopf nach Anspruch 1 oder 2, **dadurch gekennzeichnet, dass** die Hülse (17) den Schweißbolzen (15) umgibt.

4. Bolzenschweißkopf nach einem der vorhergehenden Ansprüche, **dadurch gekennzeichnet**,
a) dass die Kontakterkennungseinrichtung (23) den Werkstückkontakt bei einer Bewegung in einer ersten Richtung quer zu Vorschubrichtung signalisiert und diese erste Position bei Werkstückkontakt einliest und speichert,
b) dass die Kontakterkennungseinrichtung (23) bei einem Verfahren des Bolzenschweißkopfs (3) in einer zur ersten Richtung entgegengesetzten zweiten Richtung (B2) bis in eine zweite Position, in der sie keinen Werkstückkontakt mehr signalisiert, diese zweite Position einliest und speichert und
c) dass die Kontakterkennungseinrichtung (23) einen Referenzwert aus der ersten und der zweiten Position ermittelt, von dem aus der Bolzenschweißkopf (3) um das vorbestimmte Sollmaß (Y) seitlich in die Schweißausgangsposition bewegt wird.

5. Bolzenschweißkopf nach Anspruch 4, **dadurch gekennzeichnet, dass** das der Referenzwert der Mittelwert zwischen der ersten und der zweiten Position ist.

## Claims

1. Bolt welding head,
a) having an axially displaceable welding axle (11),
b) having a welding bolt holder (13), which is coupled to the welding axle (11),
c) wherein for detecting the lateral surface a scanning element for contacting the lateral surface is provided, which is designed as a sleeve (17) disposed coaxially with the welding bolt holder (13),
**characterized in**
d) that the bolt welding head comprises a contact recognition device (23), which during displacement of the bolt welding head (3) in a direction at right angles to the feed direction detects the presence of a lateral surface of the workpiece, and
e) that the sleeve (17) is part of a union nut (51), by means of which the welding bolt holder (13) is fastened to the welding axle (11), and that the sleeve (17) is electrically connected to the welding bolt holder (13) and
f) that the contact recognition device (23) for detecting the contact between the sleeve and the lateral surface of the workpiece is also designed as a contact recognition device (23) for detecting the contact of the welding bolt (15) with the workpiece (9) in feed direction, wherein the contact recognition device (23) is electrically connected to the welding bolt holder (13) and the sleeve (17).

2. Bolt welding head according to claim 1, **characterized in that** the sleeve (17) comprises a plurality of finger-like extensions.

3. Bolt welding head according to claim 1 or 2, **characterized in that** the sleeve (17) surrounds the welding bolt (15).

4. Bolt welding head according to one of the preceding claims, **characterized in**
a) that the contact recognition device (23) signals the workpiece contact upon a movement in a first direction at right angles to feed direction and reads in and stores said first position upon workpiece contact,
b) that the contact recognition device (23) upon displacement of the bolt welding head (3) in a second direction (B2) opposite to the first direction into a second position, in which it no longer signals workpiece contact, reads in and stores said second position and
c) that the contact recognition device (23) determines from the first and the second position a reference value, from which the bolt welding head (3) is moved by a predetermined setpoint dimension (Y) laterally into the welding starting position.

5. Bolt welding head according to claim 4, **characterized in that** the the reference value is the mean value between the first and the second position.

## Revendications

1. Tête de soudage de goujon,
a) avec un axe de soudage (11) pouvant être déplacé dans la direction axiale,
b) avec un support de goujons de soudage (13), qui est couplé à l'axe de soudage (11),
c) pour déterminer la surface latérale, un élément sensoriel étant prévu devant entrer en contact avec la surface latérale, qui est configuré sous la forme d'un manchon (17) disposé de manière coaxiale par rapport au support de goujons de soudage (13),
**caractérisée en ce que**
d) la tête de soudage de goujon est un dispositif détecteur de contact (23), qui détermine la présence d'une surface latérale de la pièce à usiner quand on déplace la tête de soudage de goujon (3) dans une direction transversale par rapport à la direction d'avancement, et
e) le manchon (17) est une partie d'un écrou d'accouplement (51) permettant, dé fixer le support de goujons de soudage (13) sur l'axe de soudage (11), et **en ce que** le manchon (17) est connecté électriquement au support de goujons de soudage (13), et
f) le dispositif détecteur de contact (23) permettant de déterminer le contact entre le manchon et la surface latérale de la pièce à usiner est également configuré sous la forme d'un dispositif détecteur de contact (23) permettant de déterminer le contact entré le goujon de soudage (15) et la pièce à usiner (9) dans la direction d'avancement, le dispositif détecteur de contact (23) étant connecté électriquement au support de goujons de soudage (13) et au manchon (17).

2. Tête de soudage de goujon selon la revendication 1, **caractérisée en ce que** le manchon (17) présente plusieurs prolongements de type doigts.

3. Tête de soudage de goujon selon la revendication 1 ou 2, **caractérisée en ce que** le manchon (17) entoure le goujon de soudage (15).

4. Tête de soudage de goujon selon l'une quelconque des revendications précédentes, **caractérisée en ce que** :
a) le dispositif détecteur de contact (23) signale le contact avec la pièce à usiner lors d'un déplacement dans un premier sens transversal par rapport à la direction d'avancement, lit et enregistre cette première position lors du contact avec la pièce à usiner,
b) le dispositif détecteur de contact (23), quand la tête de soudage de goujon (3) en allant dans un deuxième sens (B2) opposé au premier sens, arrive dans une deuxième position dans laquelle il ne signale plus de contact avec la pièce à usiner, lit et enregistre cette deuxième position,
c) le dispositif détecteur de contact (23) détermine une valeur de référence d'après la première et la deuxième position, en fonction de laquelle la tête de soudage de goujon (3) est déplacée latéralement de la dimension nominale prédéterminée (Y), dans la position de départ de soudage.

5. Tête de soudage de goujon selon la revendication 4, **caractérisée en ce que** la valeur de référence est la valeur moyenne se trouvant entre la première position et la deuxième position.
